# EUROPÄISCHE PATENTSCHRIFT

(11) **EP 3 320 222 B1**
(45) Veröffentlichungstag und Bekanntmachung des Hinweises auf die Patenterteilung: **11.09.2019**
(21) Anmeldenummer: 16736490.0
(22) Anmeldetag: 11.07.2016
(51) Int. Cl.: F16D 65/66

(54) **NACHSTELLEINRICHTUNG FÜR EINE SCHEIBENBREMSE**
ADJUSTING DEVICE FOR A DISC BRAKE
DISPOSITIF DE RATTRAPAGE POUR FREIN À DISQUE

(30) Priorität: 10.07.2015 DE 102015111166
(43) Veröffentlichungstag der Anmeldung: 16.05.2018
(73) Patentinhaber: KNORR-BREMSE Systeme für Nutzfahrzeuge GmbH, 80809 München (DE)
(72) Erfinder: BAUMGARTNER, Johann, 85368 Moosburg (DE)
(86) Internationale Anmeldenummer: PCT/EP2016/066378
(87) Internationale Veröffentlichungsnummer: WO 2017/009268

(56) Entgegenhaltungen:
- DE-A1-102012 102 577
- US-A- 3 515 248

## Beschreibung

Die vorliegende Erfindung betrifft eine Nachstelleinrichtung für eine pneumatisch betätigbare Scheibenbremse nach dem Oberbegriff des Anspruchs 1.

Mechanisch angetriebene und mechanisch wirkende Nachstellvorrichtungen, die für das Nachstellen von Bremsbelägen von pneumatisch betätigbaren Scheibenbremsen für ein Fahrzeug zum Ausgleich des Bremsbelag- und Bremsscheibenverschleißes vorgesehen sind, sind aus dem Stand der Technik bekannt. Sie werden bei einer Bremsbetätigung angetrieben.

Im Folgenden wird mehrfach der Begriff "Lüftspiel" verwendet.

Mit "Lüftspiel" ist der Abstand zwischen Bremsbelag und Bremsscheibe gemeint. Ein Abstand zwischen Bremsbelag und Bremsscheibe ist nötig, damit im Zustand "Bremse gelöst" die Bremsscheibe vollständig frei und somit ungebremst laufen kann.

Unterschieden wird dabei zwischen dem "konstruktiven Lüftspiel", also dem nominalen, theoretischen Lüftspiel, das im Rahmen der konstruktiven Auslegung einer Scheibenbremse festgelegt wird und dem "tatsächlichen Lüftspiel", dessen Betrag an einer kalten Scheibenbremse zwischen Bremsbelag und Bremsscheibe messbar ist und Toleranzen unterworfen ist, so dass dessen Betrag vom Betrag des konstruktiven Lüftspiels abweicht.

Sofern nur der Begriff "Lüftspiel" verwendet wird, ist damit das "tatsächliche Lüftspiel" gemeint. Ist im Folgenden das "konstruktive Lüftspiel" gemeint, wird auch dieser Begriff verwendet.

Beispiele für mechanisch angetriebene und mechanisch wirkende, kombinierte Nachstell- und Rückstellvorrichtungen, welche das Lüftspiel bei Bremsbetätigungen in Schritten vergrößern und verkleinern können, beschreiben z. B. die DE 10 2012 012 473 und die DE 10 2012 102 577.

Andere mechanisch angetriebene und mechanisch wirkende Nachstellvorrichtungen können ein vergrößertes Lüftspiel bei Bremsbetätigungen nur synchron zum Bremsvorgang verkleinern. Sie nutzen bei einer ungewollten Lüftspielreduzierung unter einen Sollwert vorhandene Rückdreheffekte an Gewindespindeln, die auf die Bremsbeläge der Scheibenbremse wirken, um das Lüftspiel in sehr kleinen Schritten zu vergrößern. Bei Erreichen eines Lüftspiel-Sollwertes wird eine weitere Rückdrehbewegung durch eine Sperrwirkung des Nachstellers gestoppt. Dieser Effekt ist potentiell in allen bekannten mechanisch wirkenden Nachstellsystemen enthalten, wird jedoch in der Regel durch hohe Halte-Reibmomente am Nachsteller und/oder am Spindelsystem unterdrückt, um ungewollte Lüftspielveränderungen, z. B. durch Schwingungseinwirkung im Fahrbetrieb, zu vermeiden.

Im Gegensatz zu den oben beschriebenen bidirektionalen Konzepten für Nachstelleinrichtungen können mit dem letzten Beispiel spontan eintretende Lüftspielverkleinerungen nur mit einer sehr großen Anzahl von Bremsbetätigungen beseitigt werden. Derartige spontan eintretende Lüftspielverkleinerungen können z.B. durch zwischen zwei Bremsungen erfolgende, starke Vibrationsbeanspruchungen, falsche Lüftspieleinstellung, Hochenergie-Bremsungen mit starkem Dickenwachstum von Bremsscheibe und Bremsbelägen hervorgerufen werden.

In der DE 10 2013 006 863 A1 wird eine Scheibenbremse mit einer bidirektionalen Verschleißnachstellvorrichtung sowie eine bidirektionale Verschleißnachstellvorrichtung beschrieben. Die in der DE 10 2013 006 863 A1 Scheibenbremse mit einer bidirektionalen Verschleißnachstellvorrichtung ist derart gestaltet, dass eine erhöhte Rückstellgeschwindigkeit der bidirektionalen Verschleißnachstellvorrichtung sowie eine verbesserte Beständigkeit gegenüber Verschleiß und Vibrationseinwirkung geschaffen wird. Der Nachteil des Wirkprinzips auf der Basis von Halte-Reibmomenten am Nachsteller und/oder am Spindelsystem bleibt jedoch bestehen.

Der Erfindung liegt daher die Aufgabe zu Grunde, eine mechanische Nachstelleinrichtung für eine Scheibenbremse zu schaffen, die die vorgenannten Nachteile des Standes der Technik vermeidet.

Die Erfindung löst die Aufgabe durch den Gegenstand des Anspruchs 1.

Demnach ist vorgesehen, dass die Nachstelleinrichtung einen Zustellhub sowie einen Rückdrehhub der Gewindespindel ausführen kann, wobei der Zustellhub und der Rückdrehhub der Gewindespindel durch Schalten von einer oder mehreren Kupplungen beendbar ist.

Dadurch ist die Nachstelleinrichtung vorteilhaft in der Lage, neben einem Zustellhub mit definiertem Betrag auch einen Rückstellhub mit definiertem Betrag auszuführen.

In einer bevorzugten Ausführungsform der Erfindung ist der Betrag des Rückdrehhubs der Nachstelleinrichtung durch einen definierten Abstand h zwischen einem Rampenstartpunkt und einem Rampenendpunkt bzw. Rampenschaltpunkt in vertikaler Richtung definiert, wobei der Abstand h in einem definierten Betriebszustand der Nachstelleinrichtung definiert ist.

Der Betrag des konstruktiven Lüftspiels der Nachtstelleinrichtung bzw. der Scheibenbremse ist dadurch in vortelhafter Weise durch einen Abstand -also einer direkt messbaren Bauteilgröße- von einem mit hoher Präzision zu fertigbaren Bauteil bzw. an Geometrieausprägungen dieses Bauteils, die ebenfalls mit hoher Präzision fertigbar sind, definiert.

Dadurch wird in besonders vorteilhafter Art und Weise der toleranzvergrößernde Einfluss von nur indirekt messbaren Bauteilkenngrößen, wie z.B. Haft- bzw. Gleitreibungskoeffizienten bzw. Haftreibungsmomente auf den Rückstellhub und damit auf den Betrag des Lüftspiels der Nachstelleinrichtung vermieden.

Besonders vorteilhaft wirkt eine solche Definition des Rückstellhubs und damit des konstruktiven Lüftspiels der Nachstelleinrichtung, wenn die Definition des Abstandes in einem einfach zu definierenden Betriebszustand der Nachstellvorrichtung erfolgt, wie es bei der vorliegenden Erfindung der Fall ist. Ein solcher Betriebszustand ist einfach und damit vorteilhaft dadurch definiert, dass in diesem Betriebszustand durch die Nachstelleinrichtung die Bremsbeläge der Scheibenbremse an die Bremsscheibe soeben angelegt sind.

In einer weiteren vorteilhaften Ausführungsvariante weist die Nachstelleinrichtung ein Getriebe mit einem Stufenzahnrad auf, wobei das Stufenzahnrad eine schaltbare Kupplung aufweist. Durch die Schaltbare Kupplung kann die Nachstelleinrichtung einfach und vorteilhaft nach dem Wechsel von verschlissenen Bremsbelägen und / oder einer verschlissenen Bremsscheibe in eine Grundstellung gebracht werden.

In einer weiteren vorteilhaften Ausführungsvariante weist die Nachstelleinrichtung , eine Welle auf, die einen Keilverzahnungsabschnitt ausbildet. Der Keilverzahnungsabschnitt steht in Wirkverbindung mit einer Keilverzahnungsnabe in einer Antriebsscheibe. Derart wird bauraumsparend und damit vorteilhaft eine axial unter Last verschiebbare, formschlüssige Wellen-Nabe-Verbindung gebildet.

In einer weiteren vorteilhaften Ausführungsvariante weist die Nachstelleinrichtung eine Hülse bzw. eine Federhülse auf, durch die das eingeleitete Drehmoment der Steilgewindewelle durch Abtriebselemente über Übertragungselemente, auf ein Innenprofil eines Abtriebsrads übertragen wird. Auf diese Weise ist eine drehfeste Kopplung der Hülse mit dem Abtriebsrad gebildet. Außerdem bildet diese Art Kopplung ein kardanisches Gelenk, wodurch vorteilhaft mögliche Kipp- bzw. Präzessions-I bewegungen einer Gewindespindel, die das Drehmoment in eine translatorisch wirkende Kraft umwandelt, ausgleichbar sind.

In einer weiteren vorteilhaften Ausführungsvariante weist die Nachstelleinrichtung eine erste Kugelrampenkupplung und eine zweite Kugelrampenkupplung auf. Durch die Verwendung von Kugelrampenkupplungen können verschiedene Drehmomentpfade, wie sie für die Funktion der Nachstelleinrichtung erforderlich sind, einfach und bauraumsparend und damit vorteilhaft geschaltet werden.

Weitere vorteilhafte Ausführungen der erfindungsgemäßen Nachstelleinrichtung sind den Unteransprüchen zu entnehmen.

Ein Ausführungsbeispiel einer erfindungsgemäßen Nachstelleinrichtung ist in den Zeichnungen dargestellt und wird im Folgenden näher beschrieben.

Es zeigen:
- Figur 1:: eine Vorderansicht der Nachstelleinrichtung im Schnitt;
- Figur 2:: ein Kinematik-Diagramm zur Funktionsdarstellung der Nachstelleinrichtung.

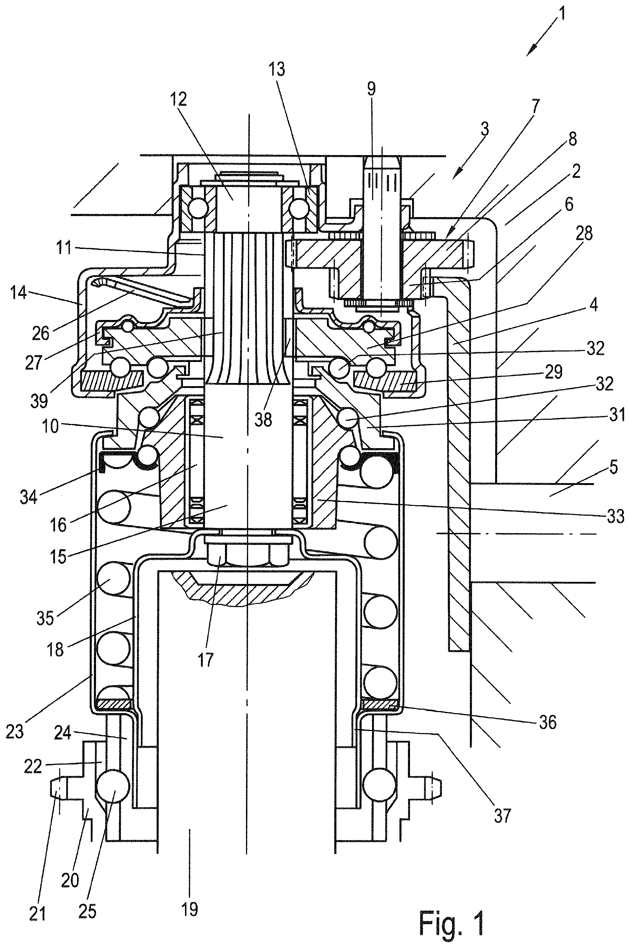

In Fig. 1 ist eine erfindungsgemäße Nachstelleinrichtung 1 im Schnitt dargestellt. Die Nachstelleinrichtung 1 ist in einem Bremssattel 2 einer Scheibenbremse eingebaut.

Die Nachstelleinrichtung 1 weist eine Aktuatoreinrichtung 3 auf, die hier als mechanische Aktuatoreinrichtung 3 ausgeführt ist. Durch die mechanische Aktuatoreinrichtung 3 wird die Nachstelleinrichtung 1 synchron zur Bremsbetätigung aktiviert.

Die Aktuatoreinrichtung 3 weist ein Getriebe auf, das hier als zweistufiges Stirnradgetriebe ausgeführt ist. Alternativ sind auch andere Getriebebauformen und / oder weniger oder mehr als zwei Getriebestufen möglich.

Das Getriebe weist ein Kronenrad-Zahnsegment 4 auf. Das Kronenrad-Zahnsegment 4 steht in Wirkverbindung mit der Bremsenbetätigung bzw. mit einem Bremshebel 5 einer Zuspannmechanik der Scheibenbremse. Das Kronenrad-Zahnsegment 4 weist eine Verzahnung auf, die beispielsweise als Evolventenverzahnung ausgeführt ist. Alternativ sind auch andere Verzahnungsgeometrien möglich. Die Verzahnung des Kronenrad-Zahnsegments 4 kämmt mit einer Verzahnung eines Ritzelabschnitts 6 eines Stufenzahnrads 7. Das Stufenzahnrad 7 weist neben dem Ritzelabschnitt 6 noch einen verzahnten Radabschnitt 8 auf. Das Stufenzahnrad 7 ist drehbar auf einer Achse 9 gelagert. Die Achse 9 ist in eine korrespondierende Bohrung im Bremssattel 2 drehfest eingesetzt.

Die Verzahnung des Kronenrad-Zahnsegments 4 kann außer Eingriff gebracht werden. Dadurch kann einfach und vorteilhaft die Nachstelleinrichtung 1 nach einem Wechsel von verschlissenen Bremsbelägen und / oder einer verschlissenen Bremsscheibe in eine Grundstellung gebracht werden, ohne dass dazu die Kinematik der Nachstelleinrichtung 1 entsprechend ausgelegt sein muss oder in der Nachstelleinrichtung 1 dazu ein spezieller Drehmomentpfad bereitgehalten werden muss. Dadurch wird in vorteilhafter Weise Bauraum gespart.

Alternativ kann zur Erreichung der Grundstellung der Nachstelleinrichtung 1 nach einem Wechsel von verschlissenen Bremsbelägen und / oder einer verschlissenen Bremsscheibe das Stufenzahnrad 7 mit einer schaltbaren Kupplung (hier nicht dargestellt) versehen sein, so dass der Ritzelabschnitt 6 des Stufenzahnrads 7 bei gelöster Kupplung unabhängig vom Radabschnitt 8 des Stufenzahnrads 7 drehbar ist.

Das Getriebe weist eine Welle 10 auf. Die Welle 10 weist einen verzahnten Ritzelabschnitt 11 auf. Die Verzahnung des Ritzelabschnitts 11 kämmt mit der Verzahnung des Radabschnitts 8 des Stufenzahnrades 7.

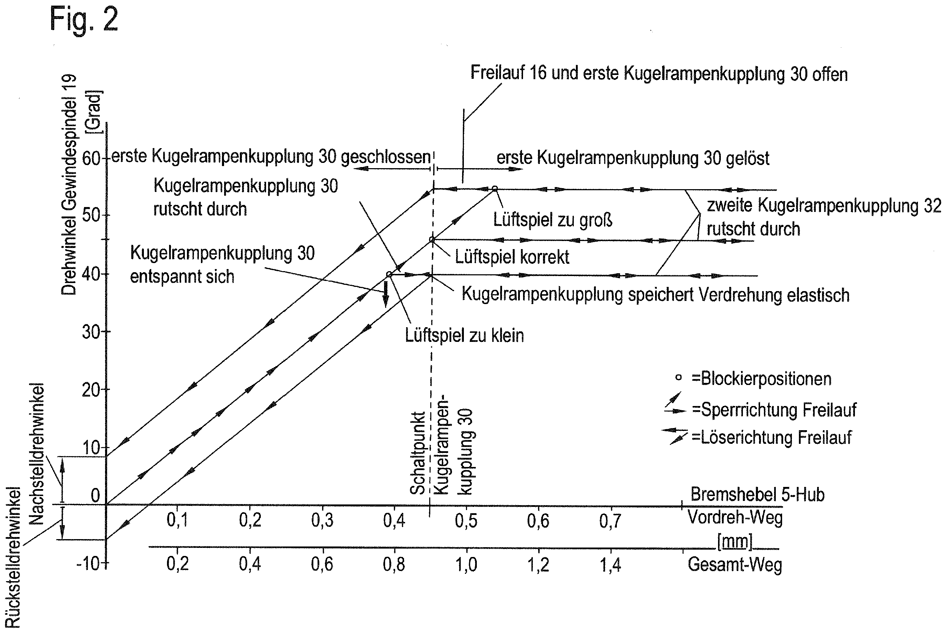

Das Kronenrad-Zahnsegment 4, das Stufenzahnrad 7 sowie der Ritzelabschnitt 11 der Welle 10 bilden somit das zweistufige Stirnradgetriebe. Das Stirnradgetriebe wandelt besonders bauraumsparend und damit vorteilhaft einen rel. kleinen Drehwinkel des Kronenrad-Zahnsegments 4 in einen um ein Gesamtübersetzungsverhältnis des Stirnradgetriebes größeren Drehwinkel der Welle 10 um (siehe dazu auch Fig. 2).

Die Welle 10 weist einen Keilverzahnungsabschnitt 39 auf. Der Keilverzahnungsabschnitt 39 der Welle 10 steht in Wirkverbindung mit einer Keilverzahnungsnabe 38 in einer Antriebsscheibe 31. Derart wird bauraumsparend und damit vorteilhaft eine axial unter Last verschiebbare, formschlüssige Wellen-Nabe-Verbindung gebildet.

Die Welle 10 weist ferner an ihrem dem Bremsbelag bzw. den Bremsbelägen (hier nicht dargestellt) abgewandten Seite einen Lagerabschnitt 12 auf, durch den die Welle 10 über ein Lager drehbar im Bremssattel 2 gelagert ist. Das Lager ist hier als Rillenkugellager 13 ausgeführt. Alternativ sind auch andere Lagerbauformen möglich.

Der Bremssattel 2 weist eine entsprechende Gehäuseöffnung bzw. Gehäusebohrung auf, in das hier ein Gehäuse 14 eingesetzt ist, in das wiederum das Rillenkugellager 13 eingesetzt und axialer Richtung in Richtung positiver y-Richtung in Bezug auf das Koordinatensystem in Fig. 1 festgelegt ist. Alternativ kann die Festlegung des Rillenkugellagers 13 in axialer Richtung auch anders z.B. durch einen Sicherungsring erfolgen.

Die Welle 10 weist einen Freilaufabschnitt 15 auf. Der Freilaufabschnitt 15 durchgreift die Nabe eines Freilaufs 16. Der Freilauf 16 kann z.B. als Klemmrollenfreilauf ausgeführt sein.

Die Welle 10 weist an ihrem dem Lagerabschnitt 12 abgewandten Ende eine axial-zentrische Innengewindesackbohrung auf. In die Innengewindesackbohrung ist eine Sechskantschraube 17 eingesetzt. Durch die Sechskantschraube 17 ist eine Hülse 18 an der Welle 10 befestigt. Die Hülse 18 schließt sich in negativer y-Richtung in Bezug auf das Koordinatensystem in Fig. 1 koaxial zur Welle 10 an. Die Hülse 18 weist einen glockenförmigen Querschnitt auf.

Die Nachstelleinrichtung 1 weist wenigstens eine Gewindespindel 19 auf. Die Gewindespindel 19 schließt sich in negativer y-Richtung in Bezug auf das Koordinatensystem in Fig. 1 koaxial zur Welle 10 an und wirkt über ein Druckstück auf die Bremsbeläge (hier nicht dargestellt) der Scheibenbremse. Die Gewindespindel 19 taucht mit ihrem der Welle 10 zugewandtem Ende zumindest teilweise in die Hülse 18 ein.

Die Nachstelleinrichtung 1 weist vorzugsweise wenigstens ein Abtriebsrad 20 auf. Das Abtriebsrad 20 weist ein Innengewinde 40 auf, das mit einem Außengewinde der Gewindespindel 19 in Wirkverbindung steht. Derart wird ein zweiter Gewindetrieb gebildet, der das Drehmoment der Welle 10 in eine translatorisch wirkende Kraft umwandelt, die z.B. über ein Druckstück (hier nicht dargestellt) auf den wenigsten einen Bremsbelag bzw. auf die Bremsscheibe der Scheibenbremse wirkt.

Optional kann das Abtriebsrad 20 auch drehfest mit der Gewindespindel 19 verbunden sein. In einem solchen Fall wird der zweite Gewindetrieb durch die Gewindespindel 19 und einem Innengewinde z.B. in einem Druckstück (hier nicht dargestellt, siehe DE 10 2012 108 672 B3, Fig. 6, Bezugszeichen 6e) oder dem Innengewinde in einer Belagplatte des Bremsbelages oder dem Innengewinde in einem weiteren Bauteil (hier nicht dargestellt, siehe DE 10 2012 108 672 B3, Fig. 6, Bezugszeichen 8) gebildet.

Das Abtriebsrad 20 weist optional ein Synchronisationsmittel 21 auf. Dieses Synchronisationsmittel 21, das hier beispielhaft als Kettenradverzahnung ausgeführt ist, die einen Umschlingungstrieb mit einer Kette zur Synchronisation der Drehbewegung der Gewindespindel 19 mit einer optional vorgesehenen zweiten Gewindespindel 19 (nicht dargestellt) führt, die ebenfalls direkt oder über ein Druckstück auf den Brems-belag wirken kann. Es sind alternativ auch andere Synchronisationsmittel 21 möglich, beispielsweise eine Evolventenverzahnung, die dann mit der Verzahnung eines Zwischenrades kämmt, dass wiederum in Wirkverbindung mit einem weiteren Abtriebsrad 20 steht. Das Abtriebsrad 20 weist ferner ein Innenprofil 22 auf. Das Innenprofil 22 ist hier beispielhaft nach der Art eines Verzahnungsprofils gestaltet.

Die Nachstelleinrichtung 1 weist ferner eine Federhülse 23 auf. Die Federhülse 23 ist koaxial zur Welle 10 angeordnet. Die Federhülse 23 weist an ihrem Umfang mehrere Abtriebselemente 24 auf, die jeweils einstückig an der Federhülse 23 angeformt sind. Das Abtriebselement 24 ist hier beispielhaft nach der Art eines Verzahnungsprofils gestaltet.

Das in die Federhülse 23 eingeleitete Drehmoment der Welle10 wird durch die Abtriebselemente 24 über Übertragungselemente 25, die hier beispielhaft als Kugeln ausgeführt sind, auf das Innenprofil 22 des Abtriebsrads 20 übertragen. Auf diese Weise ist eine drehfeste Kopplung der Federhülse 23 mit dem Abtriebsrad 20 gebildet. Außerdem bildet diese Art Kopplung ein kardanisches Gelenk, wodurch vorteilhaft mögliche Kipp- bzw. Präzessionsbewegungen der wenigstens einen Gewindespindel 19, die das Drehmoment der Welle 10 in eine translatorisch wirkende Kraft umwandelt, ausgleichbar sind.

Die Nachstelleinrichtung 1 weist eine Feder 26 auf. Die Feder 26 ist hier als Tellerfeder oder Membranfeder gestaltet. Alternativ sind auch andere Federbauformen möglich. Die Feder 26 stützt sich mit ihrem äußeren Rand bzw. ihrem Ende in positiver y-Richtung in Bezug auf das Koordinatensystem in Fig. 1 in dem Gehäuse 14 ab. Die Feder 26 stützt sich mit ihrem inneren Rand bzw. ihrem Ende in negativer y-Richtung in Bezug auf das Koordinatensystem in Fig. 1 auf einem oberen Lagering 27 eines Axialkugellagers ab.

Der obere Lagerring 27 bildet mit der Antriebsscheibe 28 und Wälzkörpern -hier als Kugeln ausgeführt- ein erstes Wälzlager, durch das die Antriebsscheibe 28 drehbar gelagert ist. Die Antriebsscheibe 28 weist an ihrer oberen Stirnseite bzw. an ihrer Seite in positiver y-Richtung in Bezug auf das Koordinatensystem in Fig. 1 eine entsprechende Rille auf, in der die Wälzköper des ersten Wälzlagers der Antriebsscheibe 28 abwälzen. Der obere Lagering 27 ist am Umfang der Antriebsscheibe 28 an ihr befestigt und greift dazu in eine entsprechende Nut ein.

Ein zweites Wälzlager, durch das durch das die Antriebsscheibe 28 drehbar gelagert ist, ist durch einen Lagerring und Wälzkörpern -hier ebenfalls als Kugeln ausgeführteiner Schaltkupplung 29 gebildet. Die Schaltkupplung 29 ist als Kugelrampenkupplung gestaltet und weist demnach eine Rampe auf (hier nicht dargestellt. Die Rampe weist einen definierten Abstand h zwischen einem Rampenstartpunkt und einem Rampenendpunkt bzw. Ramepenschaltpunkt in vertikaler Richtung bzw. in positiver y-Richtung in Bezug auf das Koordinatensystem in Fig. 1 auf, wobei der Abstand h in einem definierten Betriebszustand der Nachstelleinrichtung definiert ist.

Dieser Betriebspunkt ist dadurch definiert, dass der Bremsbelag durch die Nachstelleinrichtung 1 an die Bremsscheibe der Scheibenbremse soeben angelegt ist.

Die Antriebsscheibe 28 weist an ihrer unteren Stirnseite bzw. an ihrer Seite in negativer y-Richtung in Bezug auf das Koordinatensystem in Fig. 1 eine entsprechende Rille auf, in der die Wälzköper des zweiten Wälzlagers bzw. der Schaltkupplung 29 der Antriebsscheibe 28 abwälzen. Der Lagerring der Schaltkupplung 29 ist an seinem Umfang formschlüssig im Gehäuse 14 befestigt und greift dazu in eine entsprechende Gehäusenut ein.

Das Gehäuse 14 umschließt somit das Stirnradgetriebe sowie die Antriebsscheibe 28 mit dem oberen Lagerring, die Feder 26, die sich mit ihrem äußeren Rand bzw. ihrem Ende in positiver y-Richtung in Bezug auf das Koordinatensystem in Fig. 1 in dem Gehäuse 14 abstützt und die Schaltkupplung 29, die an seinem Umfang formschlüssig befestigt ist und dazu in eine entsprechende Gehäusenut eingreift. Das Gehäuse 14 greift mit einer korrespondierenden Geometrieausbildung, wie z.B. ein Gehäusezapfen oder einen zylindrischen Gehäuseansatz in die Öffnung bzw. Bohrung des Bremssattels 3 ein und ist in der Öffnung bzw. Bohrung z.B. durch einen Presssitz gehalten.

Die Antriebsscheibe 28 weist an ihrer unteren Stirnseite, an ihrer Seite in negativer y-Richtung in Bezug auf das Koordinatensystem in Fig. 1 eine zylinderförmige Vertiefung auf. Der Übergang zwischen dem Grund der Vertiefung und der Seitenfläche weist einen Radius auf. Der Radius bildet eine Lauffläche der Wälzkörper einer ersten Kugelrampenkupplung 30. Die Gegenlauffläche der ersten Kugelrampenkupplung 30 wird von einem kegelförmigen Ansatz einer Abtriebsscheibe 31 gebildet.

Die Abtriebsscheibe 31 weist einen glockenförmigen Querschnitt auf. Die Abtriebsscheibe 31 weist ferner eine zentrische Bohrung auf, die von der Welle 10 durchgriffen wird. Die Abtriebsscheibe 31 und die Welle 10 weisen jedoch keine direkte drehmomentfeste Welle-Nabe-Verbindung auf, so dass die Abtriebsscheibe 31 unabhängig von der Drehbewegung der Welle 10 drehbeweglich ist.

Auf ihrer Innenseite weist die glockenförmige Abtriebsscheibe 31 einen Radius auf. Der Radius bildet eine Lauffläche der Wälzkörper einer zweiten Kugelrampenkupplung 32.

Die Gegenlauffläche der zweiten Kugelrampenkupplung 32 wird von einem kegelförmigen Ansatz eines Freilaufaußenrings 33 gebildet. Der Freilaufaußenring 33 bildet gemeinsam mit dem Freilaufabschnitt 15 der Welle 10 und dem Freilauf 16 eine nur in einer Drehrichtung wirkende Kupplung.

Durch die Verwendung von Kugelrampenkupplungen 30, 32 können verschiedene Drehmomentpfade, wie sie für die Funktion der Nachstelleinrichtung 1 erforderlich sind, einfach und bauraumsparend und damit vorteilhaft geschaltet werden.

Der Freilaufaußenring 33 weist einen weiteren Radius an seiner Umfangsfläche auf. Dieser Radius bildet mit einem Zentrierring 34 und Wälzkörpern -hier als Kugeln ausgeführt- ein Wälzlager, durch das der Freilaufaußenring 33 drehbar gelagert ist.

An dem Zentrierring 34 stützt sich eine Vorspannfeder 35 ab. Die Vorspannfeder 35 ist eine schraubenförmige Torsionsfeder mit zylindrischem Querschnitt. Die Vorspannfeder 35 erstreckt sich zwischen dem Zentrierring 34 und einem weiteren, in Bezug auf den Zentrierring 34 in negativer y-Richtung in Bezug auf das Koordinatensystem in Fig. 1 koaxial zur Welle 10 angeordneten Zentrierring 36. Der Zentrierring 36 ist in die Federhülse 23 eingesetzt.

Die Federhülse 23 umgreift mit einem Ansatz 37 einen geometrisch korrespondierenden Kragen des Freilaufaußenrings 33 und ist drehfest mit dem Freilaufaußenring 33 verbunden. Die Federhülse 23 umschließt die Vorspannfeder 35 und bildet an ihrem unteren Ende bzw. in negativer y-Richtung in Bezug auf das Koordinatensystem in Fig. 1 eine Öffnung aus.

Die Federhülse 23 ist mit der Hülse 18 drehfest verbunden.

Im Folgenden wird die Funktion der Nachstelleinrichtung 1 anhand von drei Betriebszuständen der Nachstelleinrichtung 1 erläutert (siehe dazu auch Fig. 2):
- Lüftspiel korrekt
- Lüftspiel zu groß
- Lüftspiel zu klein.

Der Bremshebel 5 und das damit verbundene Kronenrad-Zahnsegment 4 stehen in Ruhestellung. Die Antriebsscheibe 28 steht in einer von der ersten Kugelrampen-kupplung 30 geschlossenen Endposition und die Lagerkugeln der Schaltkupplung 29 liegen an den Endanschlägen der Laufbahnen der Rampe der Schaltkupplung 29.

Bei Betätigung des Bremshebels 5 führt der Bremshebel 5 mit seinem Schwenkhub die Hubbewegung der wenigstens einen Gewindespindel 19 aus und bewirkt gleichzeitig mit dem Verschwenken des Kronenrad-Zahnsegmentes 4 über das Stufenzahnrad 7 die Zustell-Drehbewegung der Welle 10. Die Antriebsscheibe 28 wird durch die Ritzelverzahnungsnabe 38 in diese Drehbewegung mitgenommen.

Die Kugeln der Schaltkupplung 29 rollen auf der unteren Stufe der Laufbahnen ihrer Schaltrampe, wodurch die erste Kugelrampenkupplung 30 zunächst noch geschlossen bleibt und somit die Bewegung der Antriebsscheibe 28 weitergeleitet wird.

Gleichzeitig und damit synchron mit der Antriebsscheibe 28 wird die Vordrehbewegung der Welle 10 über die einsinnige Klemmwirkung des Freilaufs 16 und über die geschlossenen zweite Kugelrampenkupplung 32 der Abtriebsscheibe 31 auf die wenigstens eine Gewindespindel 19 übertragen. Die Drehbewegung der wenigstens eine Gewindespindel 19 wird blockiert, damit wird der sogn. Rampenschaltpunkt erreicht. Dieser Betriebszustand der Nachstelleinrichtung 1 ist dadurch definiert, dass die Bremsbeläge der Scheibenbremse an die Bremsscheibe angelegt sind.

Die erste Kugelrampenkupplung 30 wird durch die Schaltrampe in dieser Position geöffnet. Durch die erfolgte Vordrehbewegung ist das Lüftspiel bei Erreichen der Blockier-Position um 50% reduziert. Die restliche Lüftspiel-Überwindung bis zum Blockieren erfolgte durch die Hubbewegung.

Bei der weiter fortschreitenden Betätigungsbewegung des Bremshebels 5 wird die über das Kronerad-Zahnsegment 4 eingeleitete Drehbewegung der Welle 10 bei gelüfteter erster Kugelrampenkupplung 30 und durchrutschender zweiter Kugelrampen-kupplung 32 nicht auf die wenigstens eine Gewindespindel 19 übertragen.

Beim Lösen der Scheibenbremse wird der Bremshebel 5 zurückbewegt und reduziert die Spannkraft der Scheibenbremse bis zur Aufhebung der Blockierung der wenigstens einen Gewindespindel 19. Gleichzeitig betätigt das Kronenrad-Zahnsegment 4 über das Stufenzahnrad 7 die Welle 1 in rückdrehender Richtung. Diese Rückdrehbewegung wird wegen der noch blockierten wenigstens einen Gewindespindel 19 sowie der gelösten ersten Kugelrampenkupplung 30 und dem in diesem Fall in Löserichtung beaufschlagten Freilauf 16 nicht weitergeleitet.

Die Blockierung der wenigstens einen Gewindespindel 19 wird gelöst und der Rampenschaltpunkt wird erreicht:
Der Bremshebel 5 wird weiter zurückbewegt und erzeugt dabei einen Teil des Lüftspieles. Gleichzeitig treibt der Bremshebel 5 über das Kronenrad-Zahnsegment 4 und das Stufenzahrad 7 die Welle 10 in rückdrehender Richtung an. Die erste Kugelrampenkupplung 30 ist in diesem Zustand geschlossen, wodurch die Rückstellbewegung auf die wenigstens eine Gewindespindel 19 übertragen und somit die bei der Betätigung erfolgte Vordrehbewegung rückgängig gemacht wird. Damit ist der Ausgangszustand der Nachstelleinrichtung 1 wieder erreicht.

Bei einer Bremsbetätigung bei zu großem Lüftspiel ergibt sich der Ausgangszustand wie für ein korrektes Lüftspiel oben beschrieben.

Demnach stehen der Bremshebel 5 und das damit verbundene Kronenrad-Zahnsegment 4 in Ruhestellung. Die Antriebsscheibe 28 steht in einer von der ersten Kugelrampenkupplung 30 geschlossenen Endposition und die Lagerkugeln der Schaltkupplung 29 liegen an den Endanschlägen der Laufbahnen der Rampe der Schaltkupplung 29.

Bei Betätigung des Bremshebels 5 führt der Bremshebel 5 mit seinem Schwenkhub die Hubbewegung der wenigstens einen Gewindespindel 19 aus und bewirkt gleichzeitig mit dem Verschwenken des Kronenrad-Zahnsegmentes 4 über das Stufenzahnrad 7 die Zustell-Drehbewegung der Welle 10. Die Antriebsscheibe 28 wird durch die Ritzelverzahnungsnabe 38 in diese Drehbewegung mitgenommen.

Die Kugeln der Schaltkupplung 29 rollen auf der unteren Stufe der Laufbahnen ihrer Schaltrampe, wodurch die erste Kugelrampenkupplung 30 zunächst noch geschlossen bleibt und somit die Bewegung der Antriebsscheibe 28 weitergeleitet wird.

Gleichzeitig und damit synchron mit der Antriebsscheibe 28 wird die Vordrehbewegung der Welle 10 über die einsinnige Klemmwirkung des Freilaufs 16 und über die geschlossenen zweite Kugelrampenkupplung 32 der Abtriebsscheibe 31 auf die wenigstens eine Gewindespindel 19 übertragen.

Bei Erreichen des Rampenschaltpunktes wird bei zu großem Lüftspiel die wenigstens eine Gewindespindel 19 durch die einsinnige Klemmwirkung des Freilaufes 16 weitergedreht, während die erste Kugelrampenkupplung 30 gelüftet wird. Hier erfolgt der Nachstellvorgang wie mit korrektem Lüftspiel.

Der weitere Ablauf des Nachstellvorgangs ergibt sich wie nach dem Blockieren der wenigstens einen Gewindespindel 19 bei korrektem Lüftspiel.

Demnach wird die Drehbewegung der wenigstens eine Gewindespindel 19 blockiert, damit wird der sogn. Rampenschaltpunkt erreicht. Dieser Betriebszustand der Nachstelleinrichtung 1 ist dadurch definiert, dass die Bremsbeläge der Scheibenbremse an die Bremsscheibe angelegt sind.

Die erste Kugelrampenkupplung 30 wird durch die Schaltrampe in dieser Position geöffnet. Durch die erfolgte Vordrehbewegung ist das Lüftspiel bei Erreichen der Blockier-Position um 50% reduziert. Die restliche Lüftspiel-Überwindung bis zum Blockieren erfolgte durch die Hubbewegung.

Bei der weiter fortschreitenden Betätigungsbewegung des Bremshebels 5 wird die über das Kronerad-Zahnsegment 4 eingeleitete Drehbewegung der Welle 10 bei gelüfteter erster Kugelrampenkupplung 30 und durchrutschender zweiter Kugelrampen-kupplung 32 nicht auf die wenigstens eine Gewindespindel 19 übertragen.

Beim Lösen der Scheibenbremse wird der Bremshebel 5 zurückbewegt und reduziert die Spannkraft der Scheibenbremse bis zur Aufhebung der Blockierung der wenigstens einen Gewindespindel 19. Gleichzeitig betätigt das Kronenrad-Zahnsegment 4 über das Stufenzahnrad 7 die Welle 1 in rückdrehender Richtung. Diese Rückdrehbewegung wird wegen der noch blockierten wenigstens einen Gewindespindel 19 sowie der gelösten ersten Kugelrampenkupplung 30 und dem in diesem Fall in Löserichtung beaufschlagten Freilauf 16 nicht weitergeleitet.

Die Blockierung der wenigstens einen Gewindespindel 19 wird gelöst und der Rampenschaltpunkt wird erreicht:
Der Bremshebel 5 wird weiter zurückbewegt und erzeugt dabei einen Teil des Lüftspieles. Gleichzeitig treibt der Bremshebel 5 über das Kronenrad-Zahnsegment 4 und das Stufenzahrad 7 die Welle 10 in rückdrehender Richtung an. Die erste Kugelrampenkupplung 30 ist in diesem Zustand geschlossen, wodurch die Rückstellbewegung auf die wenigstens eine Gewindespindel 19 übertragen und somit die bei der Betätigung erfolgte Vordrehbewegung rückgängig gemacht wird. Damit ist der Ausgangszustand der Nachstelleinrichtung 1 wieder erreicht.

Bei einer Bremsbetätigung bei zu geringem Lüftspiel ergibt sich der Ausgangszustand wie für ein korrektes Lüftspiel oben beschrieben.

Demnach stehen der Bremshebel 5 und das damit verbundene Kronenrad-Zahnsegment 4 in Ruhestellung. Die Antriebsscheibe 28 steht in einer von der ersten Kugelrampen-kupplung 30 geschlossenen Endposition und die Lagerkugeln der Schaltkupplung 29 liegen an den Endanschlägen der Laufbahnen der Rampe der Schaltkupplung 29.

Bei Betätigung des Bremshebels 5 führt der Bremshebel 5 mit seinem Schwenkhub die Hubbewegung der wenigstens einen Gewindespindel 19 aus und bewirkt gleichzeitig mit dem Verschwenken des Kronenrad-Zahnsegmentes 4 über das Stufenzahnrad 7 die Zustell-Drehbewegung der Welle 10. Die Antriebsscheibe 28 wird durch die Ritzelverzahnungsnabe 38 in diese Drehbewegung mitgenommen.

Die Kugeln der Schaltkupplung 29 rollen auf der unteren Stufe der Laufbahnen ihrer Schaltrampe, wodurch die erste Kugelrampenkupplung 30 zunächst noch geschlossen bleibt und somit die Bewegung der Antriebsscheibe 28 weitergeleitet wird.

Gleichzeitig und damit synchron mit der Antriebsscheibe 28 wird die Vordrehbewegung der Welle 10 über die einsinnige Klemmwirkung des Freilaufs 16 und über die geschlossenen zweite Kugelrampenkupplung 32 der Abtriebsscheibe 31 auf die wenigstens eine Gewindespindel 19 übertragen.

Die wenigstens eine Gewindespindel 19 wird durch das Anlegen des wenigstens einen Bremsbelags an die Bremsscheibe blockiert. Der Rampenschaltpunkt ist noch nicht erreicht. Die weitere Vordrehbewegung wird infolge Durchrutschen der ersten Kugelrampenkupplung 16 und der zweiten Kugelrampenkupplung 17 nicht weitergeleitet. Die erste Kugelrampenkupplung 16 rutscht durch bis zum Erreichen des Rampenschaltpunktes und wird dann gelüftet. Dabei wird der Rampenschaltpunkt mit der Blockposition der Spindeln synchronisiert. Hierdurch erfolgt beim Rückhub der Ausgleich der Lüftspielabweichung. Die Bremse wird gelöst.

Der weitere Ablauf ist bis zum Erreichen des Ausgangszustandes wie bei korrektem Lüftspiel.

Demnach wird beim Lösen der Scheibenbremse der Bremshebel 5 zurückbewegt und reduziert die Spannkraft der Scheibenbremse bis zur Aufhebung der Blockierung der wenigstens einen Gewindespindel 19. Gleichzeitig betätigt das Kronenrad-Zahnsegment 4 über das Stufenzahnrad 7 die Welle 1 in rückdrehender Richtung. Diese Rückdrehbewegung wird wegen der noch blockierten wenigstens einen Gewindespindel 19 sowie der gelösten ersten Kugelrampenkupplung 30 und dem in diesem Fall in Löserichtung beaufschlagten Freilauf 16 nicht weitergeleitet.

Die Blockierung der wenigstens einen Gewindespindel 19 wird gelöst und der Rampenschaltpunkt wird erreicht:
Der Bremshebel 5 wird weiter zurückbewegt und erzeugt dabei einen Teil des Lüftspieles. Gleichzeitig treibt der Bremshebel 5 über das Kronenrad-Zahnsegment 4 und das Stufenzahrad 7 die Welle 10 in rückdrehender Richtung an. Die erste Kugelrampenkupplung 30 ist in diesem Zustand geschlossen, wodurch die Rückstellbewegung auf die wenigstens eine Gewindespindel 19 übertragen und somit die bei der Betätigung erfolgte Vordrehbewegung rückgängig gemacht wird. Damit ist der Ausgangszustand der Nachstelleinrichtung 1 wieder erreicht.

Die Rückstellbewegung der Nachstelleinrichtung 1 nach dem Tausch von verschlissenen Bremsbelägen zurück in eine Grundstellung erfolgt durch Ausrücken der Verzahnung des Kronenrad-Zahnsegmentes 4 aus der Verzahnung des Ritzelabschnitts 6 des Stufenzahnrades 7. Alternativ kann dies auch durch Betätigen der Kupplung erfolgen, die im Stufenzahnrad 7 eingebaut ist.

### Bezugszeichenliste

- 1: Nachstelleinrichtung
- 2: Bremssattel
- 3: Aktuatoreinrichtung
- 4: Kronenrad-Zahnsegment
- 5: Bremshebel
- 6: Ritzelabschnitt
- 7: Stufenzahnrad
- 8: Radabschnitt
- 9: Achse
- 10: Welle
- 11: Ritzelabschnitt
- 12: Lagerabschnitt
- 13: Rillenkugellager
- 14: Gehäuse
- 15: Freilaufabschnitt
- 16: Freilauf
- 17: Sechskantschraube
- 18: Hülse
- 19: Gewindespindel
- 20: Abtriebsrad
- 21: Synchronisationsmittel
- 22: Innenprofil
- 23: Federhülse
- 24: Antriebselement
- 25: Übertragungselement
- 26: Feder
- 27: Lagerring, oben
- 28: Antriebsscheibe
- 29: Schaltkupplung
- 30: Kugelrampenkupplung
- 31: Abtriebsscheibe
- 32: Kugelrampenkupplung
- 33: Freilaufaußenring
- 34: Zentrierring
- 35: Vorspannfeder
- 36: Zentrierring
- 37: Ansatz
- 38: Keilverzahnungsnabe
- 39: Keilverzahnungsabschnitt
- 40: Innengewinde

## Patentansprüche

1. Nachstelleinrichtung (1) für den Verschleißausgleich von einem Bremsbelag oder mehreren Bremsbelägen und / oder einer Bremsscheibe einer pneumatisch betätigbaren Scheibenbremse für ein Fahrzeug, wobei die Nachstelleinrichtung (1) eine mechanische Aktuatoreinrichtung (3) aufweist, wobei die mechanische Aktuatoreinrichtung (3) eine Drehbewegung eines Bremshebels (5) in eine Drehbewegung einer Welle (10) übersetzt, wobei die Welle (10) wenigstens eine Gewinde-spindel (19), die auf einen der Bremsbeläge wirkt, in eine rotatorische Bewegung versetzt, **dadurch gekennzeichnet, dass** die Nachstelleinrichtung (1) einen Zustellhub sowie einen Rückdrehhub der Gewindespindel (19) ausführen kann, wobei der Zustellhub und der Rückdrehhub der Gewindespindel (26) durch Schalten von einer oder mehreren Kupplungen (29, 30, 32) beendbar ist.

2. Nachstelleinrichtung (1) nach Anspruch 1, **dadurch gekennzeichnet, dass** der Betrag des Rückdrehhubs der Nachstelleinrichtung (1) durch einen definierten Abstand h zwischen zwei Geometrieausprägungen der Nachstelleinrichtung (1) definiert ist, wobei der Abstand h in einem definierten Betriebszustand der Nachstelleinrichtung (1) definiert ist.

3. Nachstelleinrichtung (1) nach Anspruch 2, **dadurch gekennzeichnet, dass** der definierte Betriebszustand, dadurch definiert ist, dass der Bremsbelag durch die Nachstelleinrichtung (1) an die Bremsscheibe der Scheibenbremse soeben angelegt ist.

4. Nachstelleinrichtung (1) nach Anspruch 2, **dadurch gekennzeichnet, dass** die Bauteile bzw. die Geometrieausprägungen, die den Abstand h definieren, ein Rampenstartpunkt und einem Rampenendpunkt bzw. Rampenschaltpunkt einer Schaltkupplung (29) sind.

5. Nachstelleinrichtung (1) nach einem der vorgenannten Ansprüche, **dadurch gekennzeichnet, dass** die Aktuatoreinrichtung (3) ein Getriebe aufweist.

6. Nachstelleinrichtung (1) nach Anspruch 5, **dadurch gekennzeichnet, dass** das Getriebe ein Stirnradgetriebe ist.

7. Nachstelleinrichtung (1) nach Anspruch 5, **dadurch gekennzeichnet, dass** das Getriebe zweistufig ist.

8. Nachstelleinrichtung (1) nach einem der Ansprüche 5 bis 7, **dadurch gekennzeichnet, dass** das Getriebe ein Kronenrad-Zahnsegment (4) und ein Stufenzahnrad (7) aufweist.

9. Nachstelleinrichtung (1) nach Anspruch 8, **dadurch gekennzeichnet, dass** das Stufenzahnrad (7) mit einer schaltbaren Kupplung versehen ist.

10. Nachstelleinrichtung (1) nach Anspruch 8 oder 9, **dadurch gekennzeichnet, dass** das Kronenrad-Zahnsegment (4) außer Eingriff mit einem Ritzelabschnitt (6) des Stufenzahnrads (7) gebracht werden kann.

11. Nachstelleinrichtung (1) nach einem der vorgenannten Ansprüche, **dadurch gekennzeichnet, dass** die Welle (10) einen Ritzelabschnitt (11) aufweist, wobei der Ritzelabschnitt (11) in Wirkverbindung mit einem Radabschnitt (8) des Stufenzahnrades (7) steht.

12. Nachstelleinrichtung (1) nach einem der vorgenannten Ansprüche, **dadurch gekennzeichnet, dass** die Welle (10) einen Keilverzahnungsabschnitt (39) aufweist, wobei der Keilverzahnungsabschnitt (39) in Wirkverbindung mit einer Keilverzahnungsnabe (38) steht.

13. Nachstelleinrichtung (1) nach einem der vorgenannten Ansprüche, **dadurch gekennzeichnet, dass** die Nachstelleinrichtung (1) eine Antriebsscheibe (28) aufweist.

14. Nachstelleinrichtung (1) nach Anspruch 13, **dadurch gekennzeichnet, dass** die Antriebsscheibe (28) die Keilverzahnungnabe (38) aufweist.

15. Nachstelleinrichtung (1) nach einem der vorgenannten Ansprüche, **dadurch gekennzeichnet, dass** die Welle (10) einen Lagerabschnitt (12) aufweist, durch den die Welle (10) über ein Lager (13) drehbar in einem Gehäuse (14) gelagert ist.

16. Nachstelleinrichtung (1) nach Anspruch 15, **dadurch gekennzeichnet, dass** das Lager ein Rillenkugellager (13) ist.

17. Nachstelleinrichtung (1) nach Anspruch 15 oder 16, **dadurch gekennzeichnet, dass** ein Bremssattel (2) einer zuzuordnenden Scheibenbremse eine Öffnung bzw. Bohrung aufweist, in der das Gehäuse (14) eingesetzt und in axialer Richtung festgelegt ist.

18. Nachstelleinrichtung (1) nach einem der Ansprüche 15 bis 17, **dadurch gekennzeichnet, dass** das Lager (13) in axialer Richtung durch eine Schulter des Gehäuses (14) festgelegt ist.

19. Nachstelleinrichtung (1) nach einem der vorgenannten Ansprüche, **dadurch gekennzeichnet, dass** die Welle (10) einen Freilaufabschnitt (15) aufweist und der Freilaufabschnitt (15) der Welle (10) die Nabe eines Freilaufs (16) durchgreift.

20. Nachstelleinrichtung (1) nach einem der vorgenannten Ansprüche, **dadurch gekennzeichnet, dass** die Welle (10) an ihrem dem Lagerabschnitt (12) abgewandten Ende eine axial-zentrische Innengewindesackbohrung aufweist, in die eine Sechskantschraube (22) eingesetzt ist, durch die eine Hülse (18) an der Welle (10) befestigt ist.

21. Nachstelleinrichtung (1) nach Anspruch 20, **dadurch gekennzeichnet, dass** sich die Hülse (18) koaxial zur Welle (13) anschließt.

22. Nachstelleinrichtung (1) nach Anspruch 22, **dadurch gekennzeichnet, dass** die Nachstelleinrichtung (1) die wenigstens eine Gewindespindel (19) aufweist und die Gewindespindel (19) mit ihrem der Welle (10) zugewandten Ende zumindest teilweise in die Hülse (18) eintaucht.

23. Nachstelleinrichtung (1) nach einem der Ansprüche 13 bis 22, **dadurch gekennzeichnet, dass** ein oberer Lagerring (27) mit der Antriebsscheibe (28) und Wälzkörpern ein erstes Wälzlager bildet, durch das die Antriebsscheibe (28) drehbar gelagert ist.

24. Nachstelleinrichtung (1) nach Anspruch 23, **dadurch gekennzeichnet, dass** die Antriebsscheibe (28) an ihrer oberen Stirnseite eine Rille aufweist, in der die Wälzköper des ersten Wälzlagers der Antriebsscheibe (28) abwälzen.

25. Nachstelleinrichtung (1) nach Anspruch 24, **dadurch gekennzeichnet, dass** der obere Lagerring (28) am Umfang der Antriebsscheibe (28) an ihr befestigt ist und dazu in eine entsprechende Nut eingreift.

26. Nachstelleinrichtung (1) nach Anspruch 25, **dadurch gekennzeichnet, dass** ein zweites Wälzlager, durch das die Antriebsscheibe (28) drehbar gelagert ist, durch mehrere Wälzkörper und die Schaltkupplung (29) gebildet ist.

27. Nachstelleinrichtung (1) nach Anspruch 26, **dadurch gekennzeichnet, dass** die Antriebsscheibe (28) an ihrer unteren Stirnseite eine Rille aufweist, in der die Wälzköper des zweiten Wälzlagers der Antriebsscheibe (28) abwälzen.

28. Nachstelleinrichtung (1) nach Anspruch 27, **dadurch gekennzeichnet, dass** die Antriebsscheibe (28) an ihrer unteren Stirnseite eine zylinderförmige Vertiefung aufweist, wobei ein Übergang zwischen dem Grund der Vertiefung und der Seitenfläche der Vertiefung einen Radius aufweist.

29. Nachstelleinrichtung (1) nach Anspruch 28, **dadurch gekennzeichnet, dass** der Radius eine Lauffläche der Wälzkörper der ersten Kupplung (30) bildet, wobei die erste Kupplung eine erste Kugelrampenkupplung (30) ist.

30. Nachstelleinrichtung (1) nach Anspruch 29, **dadurch gekennzeichnet, dass** die Gegenlauffläche der ersten Kugelrampenkupplung (30) von einem kegelförmigen Ansatz einer Abtriebsscheibe (31) gebildet ist.

31. Nachstelleinrichtung (1) nach Anspruch 30, **dadurch gekennzeichnet, dass** die Abtriebsscheibe (31) einen glockenförmigen Querschnitt aufweist.

32. Nachstelleinrichtung (1) nach Anspruch 31, **dadurch gekennzeichnet, dass** die Abtriebsscheibe (31) ferner eine zentrische Bohrung aufweist, die von der Welle (10) durchgriffen wird.

33. Nachstelleinrichtung (1) nach Anspruch 32, **dadurch gekennzeichnet, dass** die Abtriebsscheibe (31) auf ihrer Innenseite einen Radius aufweist.

34. Nachstelleinrichtung (1) nach einem der Ansprüche 28 bis 33, **dadurch gekennzeichnet, dass** der Radius eine Lauffläche der Wälzkörper einer zweiten Kupplung (32) bildet, wobei die zweite Kupplung eine zweite Kugelrampenkupplung (32) ist.

35. Nachstelleinrichtung (1) nach Anspruch 34, **dadurch gekennzeichnet, dass** die Gegenlauffläche der zweiten Kugelrampenkupplung (32) von einem kegelförmigen Ansatz eines Freilaufaußenrings (33) gebildet wird.

36. Nachstelleinrichtung (1) nach Anspruch 35, **dadurch gekennzeichnet, dass** der Freilaufaußenring (33) gemeinsam mit dem Freilaufabschnitt (15) der Welle (10) und dem Freilauf (16) eine nur in einer Drehrichtung wirkende Kupplung bildet.

37. Nachstelleinrichtung (1) nach Anspruch 36, **dadurch gekennzeichnet, dass** sich auf einem Zentrierring (34) eine Vorspannfeder (35) abstützt, wobei die Vorspannfeder (35) eine schraubenförmige Torsionsfeder mit zylindrischem Querschnitt ist.

38. Nachstelleinrichtung (1) nach Anspruch 37, **dadurch gekennzeichnet, dass** sich die Vorspannfeder (35) zwischen dem Zentrierring (34) und einem weiteren, koaxial zur Gewindespindel (19) angeordneten Zentrierring (36) erstreckt, wobei der Zentrierring (36) in einer Federhülse (23) eingesetzt ist.

39. Nachstelleinrichtung (1) nach einem der Ansprüche 35 bis 38, **dadurch gekennzeichnet, dass** die Federhülse (23) mit einem Ansatz (37) einen geometrisch korrespondierenden Kragen des Freilaufaußenrings (33) umgreift und drehfest mit dem Freilaufaußenring (33) verbunden ist.

40. Nachstelleinrichtung (1) nach Anspruch 39, **dadurch gekennzeichnet, dass** die Federhülse (23) die Vorspannfeder (35) umschließt und an ihrem unteren Ende eine Öffnung aufweist, wobei die Federhülse (23) drehfest mit der Hülse (18) verbunden ist.

41. Nachstelleinrichtung (1) nach einem der vorgenannten Ansprüche, **dadurch gekennzeichnet, dass** die Nachstelleinrichtung (1) wenigstens ein Abtriebsrad (20) aufweist.

42. Nachstelleinrichtung (1) nach Anspruch 41, **dadurch gekennzeichnet, dass** das Abtriebsrad (20) ein Synchronisationsmittel (21) aufweist.

43. Nachstelleinrichtung (1) nach Anspruch 42, **dadurch gekennzeichnet, dass** das Synchronisationsmittel (21) als Kettenradverzahnung ausgeführt ist oder als Evolventenverzahnung ausgeführt ist.

44. Nachstelleinrichtung (1) nach Anspruch 43, **dadurch gekennzeichnet, dass** das Abtriebsrad (20) ein Innenprofil (22) aufweist, wobei das Innenprofil (22) nach der Art eines Verzahnungsprofils gestaltet ist.

45. Nachstelleinrichtung (1) nach Anspruch 44, **dadurch gekennzeichnet, dass** das Abtriebsrad (20) ein Innengewinde (48) aufweist, das mit einem Außengewinde der Gewindespindel (19) in Wirkverbindung steht und so ein zweiter Gewindetrieb gebildet ist.

46. Nachstelleinrichtung (1) nach Anspruch 45, **dadurch gekennzeichnet, dass** der zweite Gewindetrieb ein Drehmoment der Gewindespindel (19) in eine translatorisch wirkende Kraft umwandelt, die auf wenigsten einen Bremsbelag bzw. auf die Bremsscheibe der zuzuordnenden Scheibenbremse wirkt.

47. Nachstelleinrichtung (1) nach Anspruch 46, **dadurch gekennzeichnet, dass** das Abtriebsrad (20) drehfest mit der Gewindespindel (19) verbunden ist.

48. Nachstelleinrichtung (1) nach einem der Ansprüche 45 bis 47, **dadurch gekennzeichnet, dass** der zweite Gewindetrieb durch die Gewindespindel (19) und einem Innengewinde in einem Druckstück oder dem Innengewinde in einer Belagplatte des Bremsbelages oder dem Innengewinde in einem weiteren Bauteil gebildet ist.

49. Nachstelleinrichtung (1) nach einem der Ansprüche 38 bis 48, **dadurch gekennzeichnet, dass** die Federhülse (23) an ihrem Umfang mehrere Abtriebselemente (24) aufweist, die jeweils einstückig an der Federhülse (23) angeformt sind, wobei die Abtriebselemente (24) jeweils nach der Art eines Verzahnungsprofils gestaltet sind.

50. Nachstelleinrichtung (1) nach Anspruch 49, **dadurch gekennzeichnet, dass** das in die Federhülse (23) eingeleitete Drehmoment der Welle (10) durch die Abtriebselemente (24) über Übertragungselemente (25) auf das Innenprofil (22) des Abtriebsrads (20) übertragen wird.

## Claims

1. A readjustment device (1) for compensating for wear on a brake pad or a plurality of brake pads and/or a brake disc of a pneumatically actuatable disc brake for a vehicle, the readjustment device (1) having a mechanical actuator device (3), this mechanical actuator device (3) converting a rotational movement of a brake lever (5) into a rotational movement of a shaft (10), the shaft (10) setting in rotary motion at least one threaded spindle (19) that acts on one of the brake pads, **characterised in that** the readjustment device (1) can carry out an advancing stroke and a reverse rotary stroke of the threaded spindle (19), it being possible to end the advancing stroke and the reverse rotary stroke of the threaded spindle (26) by switching one or more couplings (29, 30, 32).

2. A readjustment device (1) according to claim 1, **characterised in that** the magnitude of the reverse rotary stroke of the readjustment device (1) is defined by a defined spacing h between two geometrical characteristics of the readjustment device (1), the spacing h being defined in a defined operating state of the readjustment device (1).

3. A readjustment device (1) according to claim 2, **characterised in that** the defined operating state is defined by virtue of the brake pad being caused to just make contact with the brake disc of the disc brake by the readjustment device (1).

4. A readjustment device (1) according to claim 2, **characterised in that** the components or the geometrical characteristics that define the spacing h are a ramp starting point and a ramp end point or ramp switching point of a switching coupling (29).

5. A readjustment device (1) according to any one of the preceding claims, **characterised in that** the actuator device (3) has a transmission.

6. A readjustment device (1) according to claim 5, **characterised in that** the transmission is a spur gear transmission.

7. A readjustment device (1) according to claim 5, **characterised in that** the transmission is a two-stage transmission.

8. A readjustment device (1) according to any one of claims 5 to 7, **characterised in that** the transmission has a crown-wheel toothed segment (4) and a stepped gearwheel (7).

9. A readjustment device (1) according to claim 8, **characterised in that** the stepped gearwheel (7) is provided with a switchable coupling.

10. A readjustment device (1) according to claim 8 or 9, **characterised in that** the crown-wheel toothed segment (4) can be brought out of engagement with a pinion section (6) of the stepped gearwheel (7).

11. A readjustment device (1) according to any one of the preceding claims, **characterised in that** the shaft (10) has a pinion section (11), this pinion section (11) being operatively connected to a wheel section (8) of the stepped gearwheel (7).

12. A readjustment device (1) according to any one of the preceding claims, **characterised in that** the shaft (10) has a splined section (39), the splined section (39) being operatively connected to a splined hub (38).

13. A readjustment device (1) according to any one of the preceding claims, **characterised in that** the readjustment device (1) has a drive disc (28).

14. A readjustment device (1) according to any claim 13, **characterised in that** the drive disc (28) has the splined hub (38).

15. A readjustment device (1) according to any one of the preceding claims, **characterised in that** the shaft (10) has a bearing section (12) by means of which the shaft (10) is mounted rotatably via a bearing (13) in a housing (14).

16. A readjustment device (1) according to claim 15, **characterised in that** the bearing is a deep-groove ball bearing (13).

17. A readjustment device (1) according to claim 15 or 16, **characterised in that** a brake calliper (2) of a corresponding disc brake has an opening or bore in which the housing (14) is inserted and fixed in an axial direction.

18. A readjustment device (1) according to any one of claims 15 to 17, **characterised in that** the bearing (13) is fixed in an axial direction by a shoulder of the housing (14).

19. A readjustment device (1) according to any one of the preceding claims, **characterised in that** the shaft (10) has a freewheel section (15) and the freewheel section (15) of the shaft (10) extends through the hub of a freewheel (16).

20. A readjustment device (1) according to any one of the preceding claims, **characterised in that** the end of the shaft (10) facing away from the bearing section (12) has an axially central internal threaded blind hole into which is inserted a hexagon screw (22) by means of which a sleeve (18) is fastened to the shaft (10).

21. A readjustment device (1) according to claim 20, **characterised in that** the sleeve (18) adjoins the shaft (13) coaxially.

22. A readjustment device (1) according to claim 22, **characterised in that** the readjustment device (1) has the at least one threaded spindle (19) and the end of the threaded spindle (19) facing the shaft (10) protrudes at least partially into the sleeve (18).

23. A readjustment device (1) according to any one of claims 13 to 22, **characterised in that** an upper bearing ring (27) together with the drive disc (28) and rolling bodies forms a first rolling bearing by means of which the drive disc (28) is rotatably mounted.

24. A readjustment device (1) according to claim 23, **characterised in that** the drive disc (28) has on its upper face a channel in which the rolling bodies of the first rolling bearing of the drive disc (28) roll.

25. A readjustment device (1) according to claim 24, **characterised in that** the upper bearing ring (27) is fastened to the drive disc (17) at its circumference, engaging in a corresponding groove for this purpose.

26. A readjustment device (1) according to claim 25, **characterised in that** a second rolling bearing, by means of which the drive disc (28) is rotatably mounted, is formed by a plurality of rolling bodies and the switching coupling (29).

27. A readjustment device (1) according to claim 26, **characterised in that** the drive disc (28) has on its lower face a channel in which the rolling bodies of the second rolling bearing of the drive disc (28) roll.

28. A readjustment device (1) according to claim 27, **characterised in that** the drive disc (28) has on its lower face a cylindrical depression, a transition between the base of the depression and the lateral surface of the depression having a radius.

29. A readjustment device (1) according to claim 28, **characterised in that** the radius forms a running surface of the rolling bodies of the first coupling (30), the first coupling being a first ball-ramp coupling (30).

30. A readjustment device (1) according to claim 29, **characterised in that** the counterpart running surface of the first ball-ramp coupling (30) is formed by a conical projection of an output disc (31).

31. A readjustment device (1) according to claim 30, **characterised in that** the output disc (31) has a bell-shaped cross section.

32. A readjustment device (1) according to claim 31, **characterised in that** the output disc (31) further has a central bore through which the shaft (10) extends.

33. A readjustment device (1) according to claim 32, **characterised in that** the output disc (31) has a radius on its inner face.

34. A readjustment device (1) according to any one of claims 28 to 33, **characterised in that** the radius forms a running surface of the rolling bodies of the second coupling (32), the second coupling being a second ball-ramp coupling (30).

35. A readjustment device (1) according to claim 34, **characterised in that** the counterpart running surface of the second ball-ramp coupling (32) is formed by a conical projection of a freewheel outer ring (33).

36. A readjustment device (1) according to claim 35, **characterised in that** the freewheel outer ring (33) together with the freewheel section (15) of the shaft (10) and the freewheel (16) forms a coupling that acts in one direction of rotation only.

37. A readjustment device (1) according to claim 36, **characterised in that** a preload spring (35) is supported on a centering ring (34), the preload spring (35) being a helical torsion spring with a cylindrical cross section.

38. A readjustment device (1) according to claim 37, **characterised in that** the preload spring (35) extends between the centering ring (34) and a further centering ring (36) arranged coaxially in relation to the threaded shaft (19), the centering ring (36) being inserted in a spring sleeve (23).

39. A readjustment device (1) according to any one of claims 35 to 38, **characterised in that** a projection (37) of the spring sleeve (23) engages around a geometrically corresponding collar of the freewheel outer ring (33) and is connected rotationally conjointly to the freewheel outer ring (33).

40. A readjustment device (1) according to claim 39, **characterised in that** the spring sleeve (23) surrounds the preload spring (35) and has an opening at its lower end, the spring sleeve (23) being connected rotationally conjointly to the sleeve (18).

41. A readjustment device (1) according to any one of the preceding claims, **characterised in that** the readjustment device (1) has at least one output gear (20).

42. A readjustment device (1) according to claim 41, **characterised in that** the output gear (20) has a synchronization means (21).

43. A readjustment device (1) according to claim 42, **characterised in that** the synchronization means (21) takes the form of sprocket toothing or involute toothing.

44. A readjustment device (1) according to claim 43, **characterised in that** the output gear (20) has an internal profile (22), this internal profile (22) being designed in the manner of a toothed profile.

45. A readjustment device (1) according to claim 44, **characterised in that** the output gear (20) has an internal thread (48) that is operatively connected to an external thread of the threaded spindle (26), thereby forming a second threaded drive.

46. A readjustment device (1) according to claim 45, **characterised in that** the second threaded drive converts a torque of the threaded shaft (19) into a translationally acting force that acts on at least one brake pad or on the brake disc of the corresponding disc brake.

47. A readjustment device (1) according to claim 46, **characterised in that** the output gear (20) is connected rotationally conjointly to the threaded spindle (26).

48. A readjustment device (1) according to any one of claims 45 to 47, **characterised in that** the second threaded drive is formed by the threaded spindle (19) and an internal thread in a thrust piece or the internal thread in a pad plate of the brake pad or the internal thread in a further component.

49. A readjustment device (1) according to any one of claims 38 to 48, **characterised in that** the spring sleeve (23) has on its circumference a plurality of output elements (24) that are each moulded integrally onto the spring sleeve (23), the output elements (24) all being designed in the manner of a toothed profile.

50. A readjustment device (1) according to claim 49, **characterised in that** the torque of the shaft (10) introduced into the spring sleeve (23) is transmitted by the output elements (24) via transmission elements (25) to the internal profile (22) of the output gear (20).

## Revendications

1. Dispositif (1) de rattrape pour compenser l'usure d'une garniture ou de plusieurs garnitures et/ou d'un disque d'un frein à disque à actionnement pneumatique d'un véhicule, le dispositif (1) de rattrapage ayant un dispositif (3) actionneur mécanique, le dispositif (3) actionneur mécanique transformant un mouvement de rotation d'un levier (5) de frein en un mouvement de rotation d'un arbre (10), l'arbre (10) mettant au moins une broche (19) filetée qui agit sur l'une des garnitures de frein en un mouvement de rotation, **caractérisé en ce que** le dispositif (1) de rattrapage peut réaliser une course d'avance ainsi qu'une course de rotation en retour de la broche (19) filetée, dans lequel il peut mis fin à la course d'avance et à la course de rotation en retour de la broche (26) filetée en manoeuvrant un ou plusieurs embrayages (29, 30, 32).

2. Dispositif (1) de rattrapage suivant la revendication 1, **caractérisé en ce que** le montant de la course de rotation en retour du dispositif (1) de rattrapage est défini par une distance h définie entre deux estampages géométriques du dispositif (1) de rattrapage, la distance h étant définie dans un état de fonctionnement défini du dispositif (1) de rattrapage.

3. Dispositif (1) de rattrapage suivant la revendication 2, **caractérisé en ce que** l'état de fonctionnement défini est défini par le fait que la garniture de frein est appliquée à l'instant même par le dispositif (1) de rattrapage au disque du frein à disque.

4. Dispositif (1) de rattrapage suivant la revendication 2, **caractérisé en ce que** les pièces ou les estampages géométriques, qui définissent la distance h, sont un point de début d'une rampe et un point de fin d'une rampe ou un point de changement de rampe d'un embrayage (29).

5. Dispositif (1) de rattrapage suivant l'une des revendications précédentes, **caractérisé en ce que** le dispositif (3) actionneur a un engrenage.

6. Dispositif (1) de rattrapage suivant la revendication 5, **caractérisé en ce que** l'engrenage est un engrenage à roue droite.

7. Dispositif (1) de rattrapage suivant la revendication 5, **caractérisé en ce que** l'engrenage est à deux étages.

8. Dispositif (1) de rattrapage suivant l'une des revendications 5 à 7, **caractérisé en ce que** l'engrenage a un segment (4) denté de roue de chant et une roue (7) dentée à étage.

9. Dispositif (1) de rattrapage suivant la revendication 8, **caractérisé en ce que** la roue (7) dentée à étage est pourvue d'un embrayage pouvant être embrayé.

10. Dispositif (1) de rattrapage suivant la revendication 8 ou 9, **caractérisé en ce que** le segment (4) denté de roue de chant peut être mis hors de prise avec une partie (6) de pignon de la roue (7) dentée à étage.

11. Dispositif (1) de rattrapage suivant l'une des revendications précédentes, **caractérisé en ce que** l'arbre (10) a une partie (11) de pignon, la partie (11) de pignon étant en liaison d'action avec une partie (8) de roue de la roue (7) dentée à étage.

12. Dispositif (1) de rattrapage suivant l'une des revendications précédentes, **caractérisé en ce que** l'arbre (10) a une partie (39) de denture à coin, la partie (39) de denture à coin étant en coopération d'action avec un moyeu (38) de denture à coin.

13. Dispositif (1) de rattrapage suivant l'une des revendications précédentes, **caractérisé en ce que** le dispositif (1) de rattrapage a un disque (28) d'entraînement.

14. Dispositif (1) de rattrapage suivant la revendication 13, **caractérisé en ce que** le disque (28) d'entraînement a un moyeu (38) à denture à coin.

15. Dispositif (1) de rattrapage suivant l'une des revendications précédentes, **caractérisé en ce que** l'arbre (10) a une partie (12) de palier, par laquelle l'arbre est monté par un palier (13) tournant dans une enveloppe (14).

16. Dispositif (1) de rattrapage suivant la revendication 15, **caractérisé en ce que** le palier est un roulement (13) rainuré à bille.

17. Dispositif (1) de rattrapage suivant la revendication 15 ou 16, **caractérisé en ce qu'**un étrier (2) d'un frein à disque à associer a une ouverture ou un alésage, dans lequel l'enveloppe (14) est insérée et est fixée dans la direction axiale.

18. Dispositif (1) de rattrapage suivant l'une des revendications 15 à 17, **caractérisé en ce que** le palier (13) est fixé dans la direction axiale par un épaulement de l'enveloppe (14).

19. Dispositif (1) de rattrapage suivant l'une des revendications précédentes, **caractérisé en ce que** l'arbre (10) a une partie (15) de roue libre et la partie (15) de roue libre de l'arbre (10) traverse le moyeu d'une roue libre (16).

20. Dispositif (1) de rattrapage suivant l'une des revendications précédentes, **caractérisé en ce que** l'arbre (10) a, à son extrémité loin de la partie (12) de palier, un trou borgne taraudé centré axialement, dans lequel est inséré une vis (22) à six pans, par laquelle un manchon (18) est fixé à l'arbre (10).

21. Dispositif (1) de rattrapage suivant la revendication 20, **caractérisé en ce que** le manchon (18) se raccorde coaxialement à l'arbre (13).

22. Dispositif (1) de rattrapage suivant la revendication 22, **caractérisé en ce que** le dispositif (1) de rattrapage a la au moins une broche (19) filetée et la broche (19) filetée plonge, par son extrémité tournée vers l'arbre (10), au moins en partie, dans le manchon (18).

23. Dispositif (1) de rattrapage suivant l'une des revendications 13 à 22, **caractérisé en ce qu'**un coussinet (27) supérieur forme avec le disque (28) d'entraînement et des corps de roulement un premier palier à roulement, par lequel le disque (28) d'entraînement est monté tournant.

24. Dispositif (1) de rattrapage suivant la revendication 23, **caractérisé en ce que** le disque (28) d'entraînement a sur son côté frontal supérieur une rainure, dans laquelle roulent les corps de roulement du premier palier à roulement du disque (28) d'entraînement.

25. Dispositif (1) de rattrapage suivant la revendication 24, **caractérisé en ce que** le coussinet (28) supérieur est, au pourtour du disque (28) d'entraînement, fixé à celui-ci et pénètre à cet effet dans une rainure correspondante.

26. Dispositif (1) de rattrapage suivant la revendication 25, **caractérisé en ce qu'**un deuxième palier à roulement, par lequel le disque (28) d'entraînement est monté tournant, est formé par plusieurs corps de roulement et par l'embrayage (29).

27. Dispositif (1) de rattrapage suivant la revendication 26, **caractérisé en ce que** le disque (28) d'entraînement a sur son côté frontal inférieur une rainure, dans laquelle roulent les corps de roulement du deuxième palier à roulement du disque (28) d'entraînement.

28. Dispositif (1) de rattrapage suivant la revendication 27, **caractérisé en ce que** le disque (28) d'entraînement a sur son côté frontal inférieur une cavité de forme cylindrique, une transition entre le fond de la cavité et la surface latérale de la cavité ayant un rayon.

29. Dispositif (1) de rattrapage suivant la revendication 28, **caractérisé en ce que** le rayon forme une surface de roulement des corps de roulement du premier embrayage (30), le premier embrayage étant un premier embrayage (30) à rampe à bille.

30. Dispositif (1) de rattrapage suivant la revendication 29, **caractérisé en ce que** la contre surface de roulement du premier embrayage (30) à rampe à bille est formé d'un appendice conique d'un disque (31) de sortie.

31. Dispositif (1) de rattrapage suivant la revendication 30, **caractérisé en ce que** le disque (31) de sortie a une section transversale en forme de cloche.

32. Dispositif (1) de rattrapage suivant la revendication 31, **caractérisé en ce que** le disque (31) de sortie a en outre un alésage central dans lequel passe l'arbre (10).

33. Dispositif (1) de rattrapage suivant la revendication 32, **caractérisé en ce que** le disque (31) de sortie a un rayon sur sa face intérieure.

34. Dispositif (1) de rattrapage suivant l'une des revendications 28 à 33, **caractérisé en ce que** le rayon forme une surface de roulement des corps de roulement d'un deuxième embrayage (32), le deuxième embrayage étant un deuxième embrayage (32) à rampe à bille.

35. Dispositif (1) de rattrapage suivant la revendication 34, **caractérisé en ce que** la contre surface de roulement du deuxième embrayage (32) à rampe à bille est formée d'un appendice conique d'une bague (33) extérieure de roue libre.

36. Dispositif (1) de rattrapage suivant la revendication 35, **caractérisé en ce que** la bague (33) extérieure de roue libre forme ensemble avec la partie (15) de roue libre de l'arbre (10) et la roue libre (16) un embrayage n'agissant que dans un sens de rotation.

37. Dispositif (1) de rattrapage suivant la revendication 36, **caractérisé en ce qu'**un ressort (35) de précontrainte s'appuie sur une bague (34) de centrage, le ressort (35) de précontrainte étant un ressort de torsion hélicoïdale de section transversale cylindrique.

38. Dispositif (1) de rattrapage suivant la revendication 37, **caractérisé en ce que** le ressort (35) de précontrainte s'étend entre la bague (34) de centrage et une autre bague (36) de centrage coaxiale à la broche (19) filetée, la bague (36) de centrage étant insérée dans un manchon (23) de ressort.

39. Dispositif (1) de rattrapage suivant l'une des revendications 35 à 38, **caractérisé en ce que** le manchon (23) de ressort entoure par un prolongement (37) un collet correspondant géométriquement de la bague (33) extérieure de roue libre et est solidaire en rotation de la bague (33) extérieure de roue libre.

40. Dispositif (1) de rattrapage suivant la revendication 39, **caractérisé en ce que** le manchon (23) de ressort entoure le ressort (35) de précontrainte et a à son extrémité inférieure une ouverture, le manchon (23) de ressort étant solidaire en rotation du manchon (18).

41. Dispositif (1) de rattrapage suivant l'une des revendications précédentes, **caractérisé en ce que** le dispositif (1) de rattrapage a au moins une roue (20) de sortie.

42. Dispositif (1) de rattrapage suivant la revendication 41, **caractérisé en ce que** la roue (20) de sortie a un moyen (21) de synchronisation.

43. Dispositif (1) de rattrapage suivant la revendication 42, **caractérisé en ce que** le moyen (21) de synchronisation est réalisé sous la forme d'une denture à roue à chaîne ou sous la forme d'un engrenage à roue à chaîne ou d'un engrenage à développante.

44. Dispositif (1) de rattrapage suivant la revendication 43, **caractérisé en ce que** la roue (20) de sortie a un profil (22) intérieur, le profil (22) intérieur étant conformé à la façon d'un profil de denture.

45. Dispositif (1) de rattrapage suivant la revendication 44, **caractérisé en ce que** la roue (20) de sortie a un taraudage (48) qui est en liaison d'action avec un filetage de la broche (19) filetée et forme ainsi un deuxième engrenage.

46. Dispositif (1) de rattrapage suivant la revendication 45, **caractérisé en ce que** le deuxième engrenage transforme un couple de la broche (19) filetée en une force de translation qui s'applique à au moins une garniture ou au disque du frein à disque à associer.

47. Dispositif (1) de rattrapage suivant la revendication 46, **caractérisé en ce que** la roue (20) de sortie est solidaire en rotation de la broche (19) filetée.

48. Dispositif (1) de rattrapage suivant l'une des revendications 45 à 47, **caractérisé en ce que** le deuxième engrenage est formé par la broche (19) filetée et un taraudage d'une pièce de pression ou le taraudage d'une plaque de la garniture de frein ou le taraudage d'une autre pièce.

49. Dispositif (1) de rattrapage suivant l'une des revendications 38 à 48, **caractérisé en ce que** le manchon (23) de ressort a sur son pourtour plusieurs éléments (24) de sortie qui sont formés chacun d'une seule pièce sur le manchon (23) de ressort, les éléments (24) de sortie étant conformés chacun à la façon d'un profil de denture.

50. Dispositif (1) de rattrapage suivant la revendication 49, **caractérisé en ce que** le couple, appliqué au manchon (23) de ressort, de l'arbre (3) est transmis par les éléments (24) de sortie par l'intermédiaire d'éléments (25) de transmission au profil (22) intérieur de la roue (20) de sortie.
